# EUROPÄISCHE PATENTANMELDUNG

(11) **EP 4 752 035 A1**
(43) Veröffentlichungstag der Anmeldung: **03.06.2026**
(21) Anmeldenummer: 25218717.4
(22) Anmeldetag: 26.11.2025
(51) Int. Cl.: B62D 5/00, B62D 9/00, B60W 50/02, B60G 17/00

(54) **KRAFTFAHRZEUG UND VERFAHREN ZUM BETREIBEN EINES KRAFTFAHRZEUGS BEI EINER ERKANNTEN STÖRUNG DES STEER-BY-WIRE-LENKSYSTEMS**

(30) Priorität: 28.11.2024 BE 202405839
(71) Anmelder: thyssenkrupp Presta AG, 9492 Eschen (LI); thyssenkrupp AG, 45143 Essen (DE)
(72) Erfinder: Lapis, Leonard, 9466 Sennwald (CH); Lang, Dominik, 6840 Götzis (AT)
(74) Vertreter: thyssenkrupp Intellectual Property GmbH

(57) **Zusammenfassung**

Die vorliegende Erfindung betrifft ein Verfahren zum Betreiben eines Kraftfahrzeugs (1) mit einem Steer-by-Wire-Lenksystem (10), einem Antriebssystem (60), einem Bremssystem (70) und einem Feder-Dämpfung-System (80), wobei den Systemen (10, 60, 70, 80) ansteuerbare Aktuatoren (16, 19, 61, 62, 71, 72, 73, 74, 81, 82, 83, 84) zugeordnet sind und das Steer-by-Wire-Lenksystem (10) als einen ansteuerbaren Aktuator einen auf ein Koppelelement (15) wirkenden Lenksteller (16) umfasst, wobei über das Koppelelement (15) ein Radlenkwinkel (α) von gelenkten Rädern (7) des Kraftfahrzeugs (1) einstellbar ist, wobei bei einem Fahrbetrieb des Kraftfahrzeugs (1) eine Soll-Trajektorie (2) für das Kraftfahrzeug (1) bestimmt wird, und bei einer erkannten Störung des Steer-by-Wire-Lenksystems (10) eine Untermenge der funktionsfähigen Aktuatoren (71, 72, 73, 74) derart angesteuert wird, dass das Kraftfahrzeug (1) der bestimmten Soll-Trajektorie (2) weiter folgt, und der Lenksteller (16) zudem derart angesteuert wird, dass der Lenksteller (16) gezielt eine Änderung eines Radlenkwinkels (α) von gelenkten Rädern (7) des Kraftfahrzeugs (1) zur Reduzierung einer Abweichung von der Soll-Trajektorie (2) dämpft oder zulässt. Ferner betrifft die Erfindung ein Kraftfahrzeug (1) das für einen Betrieb gemäß einem solchen Verfahren ausgebildet ist.

## Beschreibung

Die Erfindung betrifft ein Verfahren zum Betreiben eines Kraftfahrzeugs mit einem Steer-by-Wire-Lenksystem, einem Antriebssystem, einem Bremssystem und einem Feder-Dämpfungs-System, wobei den Systemen ansteuerbare Aktuatoren zugeordnet sind, wobei bei einem Fahrbetrieb des Kraftfahrzeugs eine Fahrvorgabe erfasst und eine Soll-Trajektorie für das Kraftfahrzeug bestimmt wird, und wobei bei einer Störung des Steer-by-Wire-Lenksystems das Kraftfahrzeug der Soll-Trajektorie im Wesentlichen weiter folgt. Des Weiteren betrifft die Erfindung ein Kraftfahrzeug, das ausgebildet ist, gemäß einem solchen Verfahren betrieben zu werden.

Falls das Lenksystem eines Kraftfahrzeugs ausfällt, insbesondere bei Fahrzeuggeschwindigkeiten über 80 km/h, wird die Fahrzeugstabilität und die Kontrollierbarkeit des Kraftfahrzeugs stark beeinträchtigt, was zu einem erhöhten Unfallrisiko führt, beispielsweise weil das unkontrollierte Lenksystem das Fahrzeug in eine ungewollte Richtung lenken kann.

Aus der DE 10 2018 103 822 A1 ist ein Lenk- und Bremssteuersystem bekannt, das dafür sorgt, dass ein Kraftfahrzeug auch bei einem Ausfall des Lenksystems eine vorgegebene Fahrtrichtung beibehalten kann. Dazu übernimmt das Bremssystem im Falle eines Lenksystemfehlers die Steuerung durch asymmetrische Bremskraftanwendung an den Rädern. Die asymmetrische Bremskraft wird so auf die Räder verteilt, dass ein resultierendes Gierdrehmoment des Kraftfahrzeugs im Wesentlichen dem Gierdrehmoment entspricht, das sich bei funktionsfähigem Lenksystem eingestellt hätte.

Auch die DE 10 2020 124 354 A1 beschreibt ein ähnlich ausgebildetes Lenk- und Bremssteuersystem. Dabei ist vorgesehen, dass bei einem Ausfall des primären Lenksystems ein Kraftfahrzeug durch gezielte Bremseingriffe gelenkt wird, um das Lenken des Kraftfahrzeugs bis zu seinem Ziel abzuschließen oder um das Kraftfahrzeug einfach an den Straßenrand zu lenken. Ein Dämpfungssystem kann dabei ein Lenkmoment eines gelenkten Rades dämpfen.

Zudem beschreibt die US 2022/0111895 A1 ein Lenk- und Bremssteuersystem, wobei ein Fahrweg des Kraftfahrzeugs kontinuierlich erfasst wird, und bei einem Ausfall des Lenksystems ausgehend von einem erfassten Lenkwinkel eine gewünschte Gierrate bestimmt und das Bremssystem zur Umsetzung der gewünschten Gierrate angesteuert wird.

Ausgehend hiervon ist es eine Aufgabe der vorliegenden Erfindung, ein Unfallrisiko für ein Kraftfahrzeug bei einer auftretenden Störung in Bezug auf das Steer-by-Wire-Lenksystem weiter zur reduzieren und die Fahrzeugstabilität und die Kontrollierbarkeit des Kraftfahrzeugs bei einer Beeinträchtigung des Steer-by-Wire-Lenksystems zu verbessern.

Zur Lösung dieser Aufgabe werden ein Verfahren zum Betreiben eines Kraftfahrzeugs gemäß Anspruch 1 und ein Kraftfahrzeug gemäß dem nebengeordneten Anspruch vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines Kraftfahrzeugs mit einem Steer-by-Wire-Lenksystem, einem Antriebssystem, einem Bremssystem und einem Feder-Dämpfung-System vor. Den Systemen, insbesondere dem Steer-by-Wire-Lenksystem, dem Antriebssystem, dem Bremssystem und dem Feder-Dämpfungssystem, sind ansteuerbare Aktuatoren zugeordnet, mit denen das jeweilige System vorteilhafterweise gesteuert werden kann. Das Steer-by-Wire-Lenksystem des Kraftfahrzeugs umfasst als einen ansteuerbaren Aktuator einen auf ein Koppelelement, insbesondere auf eine Zahnstange, wirkenden Lenksteller, wobei über das Koppelelement ein Radlenkwinkel von gelenkten Rädern des Kraftfahrzeugs eingestellt werden kann. Das Verfahren sieht weiter vor, dass bei einem Fahrbetrieb des Kraftfahrzeugs unter Berücksichtigung einer aktuellen Fahrvorgabe eines Fahrzeugnutzers oder einer aktuellen Fahrvorgabe eines Fahrerassistenzsystems eine Soll-Trajektorie für das Kraftfahrzeug bestimmt wird. Außerdem wird die Funktionsfähigkeit der Aktuatoren geprüft, insbesondere kontinuierlich in vorzugsweise vorgegebenen zeitlichen Abständen geprüft. Bei einer erkannten Störung des Steer-by-Wire-Lenksystems, insbesondere einer das Lenkvermögen des Steer-by-Wire-Lenksystems einschränkenden Störung, wird zumindest eine Untermenge der funktionsfähigen Aktuatoren derart angesteuert, dass das Kraftfahrzeug der bestimmten Soll-Trajektorie weiter zumindest weitgehend folgt. Weitgehend folgt meint dabei insbesondere, dass das Kraftfahrzeug im Wesentlichen der Soll-Trajektorie folgt, es dabei aber zu Abweichungen kommen kann, sodass eine tatsächliche Ist-Trajektorie insbesondere nicht identisch mit der Soll-Trajektorie sein muss, aber insbesondere eine aus der Soll-Trajektorie resultierende Fahrtrichtung eingehalten wird.

Zudem sieht das Verfahren vor, dass der auf das Koppelelement wirkende Lenksteller zusätzlich derart angesteuert wird, dass der Lenksteller gezielt eine Änderung eines Radlenkwinkels von gelenkten Rädern des Kraftfahrzeugs zur Reduzierung einer Abweichung von der Soll-Trajektorie dämpft oder zulässt, insbesondere bedarfsweise im Wechsel dämpft oder zulässt. Das Verfahren ist somit vorteilhafterweise ausgebildet, dass der Lenksteller sowohl derart angesteuert werden kann, dass der Lenksteller gezielt eine Änderung eines Radlenkwinkels von gelenkten Rädern des Kraftfahrzeugs zur Reduzierung einer Abweichung von der Soll-Trajektorie dämpft, als auch dass der Lenksteller gezielt eine Änderung eines Radlenkwinkels von gelenkten Rädern des Kraftfahrzeugs zur Reduzierung einer Abweichung von der Soll-Trajektorie zulässt. Vorteilhafterweise wird eine Bewegung der gelenkten Räder durch den Lenksteller gedämpft, wenn ein Radlenkwinkel geeignet ist, damit das Kraftfahrzeug der Soll-Trajektorie weiter folgt, und eine Änderung des Radlenkwinkels der gelenkten Räder zugelassen, wenn durch eine Ansteuerung wenigstens eines weiteren Aktuators aus der Untermenge der funktionsfähigen Aktuatoren der Radlenkwinkel für eine Einhaltung der Soll-Trajektorie eingestellt werden kann, wobei ein dann eingestellter Radlenkwinkel vorteilhafterweise wiederum durch ein Dämpfen der gelenkten Räder mittels des Lenkstellers beibehalten wird. Insbesondere wird der Lenksteller zur Reduzierung der Abweichung von der Soll-Trajektorie entsprechend angesteuert, insbesondere von einer Steuereinheit, weiter insbesondere von einer Steuereinheit eines Vehicle-Motion-Control-Systems des Kraftfahrzeugs.

Ist also beispielsweise ein aktuell eingestellter Radlenkwinkel geeignet, damit das Kraftfahrzeug der Soll-Trajektorie weiter folgt, dämpft der Lenksteller vorteilhafterweise eine Bewegung der Koppelstange und somit der gelenkten Räder und sorgt somit vorteilhafterweise dafür, dass der eingestellte Radlenkwinkel im Wesentlichen unverändert beibehalten wird. Ist dagegen beispielsweise ein aktuell eingestellter Radlenkwinkel ungeeignet, damit das Kraftfahrzeug der Soll-Trajektorie weiter folgt, wird, insbesondere abhängig von der Funktionsfähigkeit der weiteren Aktuatoren, vorteilhafterweise entweder der Lenksteller dennoch so angesteuert, dass dieser eine Bewegung der Koppelstange dämpft, insbesondere um das Fahrverhalten des Kraftfahrzeugs deterministisch zu machen und somit die Kontrollierbarkeit des Kraftfahrzeugs zu erhöhen, was insbesondere bei kleinen Radlenkwinkeln, weiter insbesondere von Radlenkwinkeln zwischen 0° und 5° vorteilhaft ist, oder weiter vorteilhaft wird der auf das Koppelelement wirkende Lenksteller derart angesteuert, dass eine Änderung des Radlenkwinkels der gelenkten Räder zugelassen wird, insbesondere wenn durch eine Ansteuerung weiterer Aktuatoren, insbesondere von Brems-, Antriebs- und/oder Feder-Dämpfung-Aktuatoren, der Radlenkwinkel für eine Einhaltung der Soll-Trajektorie eingestellt werden kann, wobei ein dann eingestellter Radlenkwinkel vorteilhafterweise wiederum durch ein Dämpfen des Koppelelements mittels des Lenkstellers beibehalten wird. Dabei ist zudem insbesondere vorgesehen, dass für die Einstellung des Radlenkwinkels mittels der weiteren Aktuatoren, insbesondere der Brems-, Antriebs- und/oder Feder-Dämpfung-Aktuatoren, eine Änderung des Radlenkwinkels immer wieder im Wechsel durch den Lenksteller gedämpft oder zugelassen wird. Durch das Dämpfen wird die Koppelstange in einer aktuellen Position fixiert, insbesondere um negative Einflüsse, die der Einstellung des gewollten Radlenkwinkels entgegenwirken, insbesondere durch einen unebenen Fahrbahnuntergrund, zu reduzieren. Vorteilhafterweise wird somit durch die Ansteuerung des Lenkstellers die Fahrzeugstabilität und die Kontrollierbarkeit des Kraftfahrzeugs bei einer Störung des Steer-by-Wire-Lenksystems verbessert, was ein Unfallrisiko in Folge der Störung senkt. Je nach Grad der noch durch entsprechende Ansteuerung der funktionsfähigen Aktuatoren erhaltenen Lenkfähigkeit kann vorgesehen sein, dass das Kraftfahrzeug noch eine sogenanntes "Limp-home-Manöver" ausführt.

Die Funktionsfähigkeit der Aktuatoren wird vorteilhafterweise durch eine Abfrage eines Status-Signals der Aktuatoren geprüft, wobei die Abfrage insbesondere in sich zeitlich wiederholenden Abständen erfolgt. Das Status-Signal kann dabei insbesondere von einer dem jeweiligen Aktuator zugeordneten Diagnoseeinheit bereitgestellt werden. Zusätzlich oder alternativ ist vorteilhafterweise vorgesehen, dass die Funktionsfähigkeit der Aktuatoren durch einen Vergleich einer von einem jeweiligen Aktuator angeforderten Leistung mit einer von dem jeweiligen Aktuator bereitgestellten Leistung geprüft wird. Insbesondere dann, wenn eine angeforderte Leistung signifikant von einer bereitgestellten Leistung abweicht, wird vorteilhafterweise auf einen Funktionsausfall der entsprechenden Aktuatoreinheit erkannt.

Insbesondere ist vorgesehen, dass der Lenksteller einen mehre Phasen umfassenden Elektromotor, insbesondere einen Dreiphasen-Elektromotor, umfasst. Eine Änderung des Radlenkwinkels beziehungsweise eine Bewegung der Koppelstange wird dann vorteilhafterweise durch ein Kurzschließen der Phasen gedämpft. Durch ein Trennen des Kurzschlusses der Phasen, also eine Unterbrechung der durch den Kurzschluss geschaffenen leitenden Verbindung zwischen den Phasen, wird vorteilhafterweise eine Änderung des Radlenkwinkels beziehungsweise eine Bewegung der Koppelstange zugelassen.

Eine weitere vorteilhafte Ausgestaltung des vorgeschlagenen Verfahrens sieht zudem vor, dass das Steer-by-Wire-Lenksystem des Weiteren eine Hinterradlenkung mit einem Hinterradlenksteller als einen weiteren ansteuerbaren Aktuator umfasst. Bei der erkannten Störung des Steer-by-Wire-Lenksystems wird der Hinterradlenksteller dann vorteilhafterweise bei gegebener Funktionsfähigkeit als ein Aktuator aus der Untermenge der funktionsfähigen Aktuatoren derart angesteuert, dass das Kraftfahrzeug der bestimmten Soll-Trajektorie weiter zumindest weitgehend folgt. Dabei ist insbesondere vorgesehen, dass eine Vorderradlenkung des Steer-by-Wire-Lenksystems mit dem auf das Koppelelement wirkenden Lenksteller in einem störungsfreien Normalbetrieb hauptsächlich für das Umsetzen einer Lenkvorgabe in einen entsprechenden Radlenkwinkel verantwortlich ist, wobei die Hinterradlenkung in dem Normalbetrieb fahrsituationsabhängig unterstützend zur Umsetzung der Lenkvorgabe beiträgt.

Gemäß einer weiteren vorteilhaften Ausgestaltung umfasst das Bremssystem den Rädern des Kraftfahrzeugs zugeordnete Bremsaktuatoren als weitere ansteuerbare Aktuatoren. Bei der erkannten Störung des Steer-by-Wire-Lenksystems die Bremsaktuatoren bei gegebener Funktionsfähigkeit als Aktuatoren aus der Untermenge der funktionsfähigen Aktuatoren derart asymmetrisch angesteuert werden, dass ein Giermoment erzeugt wird, sodass das Kraftfahrzeug der Soll-Trajektorie weiter zumindest weitgehend folgt. Insbesondere ist vorgesehen, dass insbesondere auch zur Einstellung eines Radlenkwinkels, insbesondere zur Vergrößerung oder zur Verringerung eines eingestellten Radlenkwinkels, bei einer Störung des Steer-by-Wire-Lenksystems eine Änderung des Radlenkwinkels durch den Lenksteller zugelassen wird, eine Bewegung des Koppelelements also nicht gedämpft wird, und durch ein gezieltes Abbremsen des vorderen linken Rades oder des vorderen rechten Rades der Radlenkwinkel derart beeinflusst wird, dass das Kraftfahrzeug weiter verbessert der Soll-Trajektorie folgt.

Des Weiteren sieht eine vorteilhafte Weiterbildung des vorgeschlagenen Verfahrens vor, dass das Antriebssystem des Kraftfahrzeugs den Rädern des Kraftfahrzeugs zugeordnete Antriebsaktuatoren als weitere ansteuerbare Aktuatoren umfasst, insbesondere einen einem jeden Rad zugeordneten Elektromotor als Antriebsaktuatoren. Bei der erkannten Störung des Steer-by-Wire-Lenksystems werden die Antriebsaktuatoren bei gegebener Funktionsfähigkeit als Aktuatoren aus der Untermenge der funktionsfähigen Aktuatoren derart angesteuert, dass ein Giermoment erzeugt wird, sodass das Kraftfahrzeug der Soll-Trajektorie weiter zumindest weitgehend folgt. Weiter vorteilhaft kann bei einer Störung des Steer-by-Wire-Lenksystems insbesondere auch durch gezielte Ansteuerung des dem vorderen linken Rad oder dem vorderen rechten Rad zugeordneten Antriebsaktuator ein eingestellter Radlenkwinkel verändert, insbesondere vergrößert oder verringert, werden. Für die Änderung des Radlenkwinkels, insbesondere zur Vergrößerung oder zur Verringerung eines eingestellten Radlenkwinkels, wird dann vorteilhafterweise eine Bewegung des Koppelelements durch den Lenksteller zugelassen, eine Bewegung des Koppelelements also nicht gedämpft. Durch ein gezieltes Aufbringen eines Antriebsmoments auf das vordere linke Rad und/oder das vordere rechte Rad wird der Radlenkwinkel vorteilhafterweise derart beeinflusst, dass das Kraftfahrzeug weiter verbessert der Soll-Trajektorie folgt.

Weiter vorteilhaft umfasst das Feder-Dämpfung-System des Kraftfahrzeugs den Rädern des Kraftfahrzeugs jeweils zugeordnete Dämpfungs-Aktuatoren, insbesondere semiaktive Dämpfer oder aktive Dämpfer, als weitere ansteuerbare Aktuatoren. Bei der erkannten Störung des Steer-by-Wire-Lenksystems werden die Dämpfungs-Aktuatoren bei gegebener Funktionsfähigkeit als Aktuatoren aus der Untermenge der funktionsfähigen Aktuatoren vorteilhafterweise derart angesteuert, dass ein Radlenkwinkel der lenkbaren Räder gezielt beeinflusst wird, insbesondere vergrößert oder verringert wird, sodass das Kraftfahrzeug der Soll-Trajektorie weiter zumindest weitgehend folgt. Auch hierbei wird vorteilhafterweise je nach Anforderung eine Bewegung des Koppelelements durch den Lenksteller gedämpft oder zugelassen.

Gemäß einer weiteren vorteilhaften Ausgestaltung wird bei der erkannten Störung des Steer-by-Wire-Lenksystems wenigstens ein Aktuator aus der Untermenge der funktionsfähigen Aktuatoren des Weiteren derart angesteuert, dass das Kraftfahrzeug zum Stillstand gebracht wird. Insbesondere ist vorgesehen, dass die funktionsfähigen Aktuatoren des Kraftfahrzeugs derart angesteuert werden, dass das Kraftfahrzeug ein sogenanntes "Limp-aside-Manöver" ausführt. Dabei folgt das Kraftfahrzeug bei der Reduzierung der Fahrgeschwindigkeit des Kraftfahrzeugs vorteilhafterweise im Wesentlichen weiter der Soll-Trajektorie, wodurch vorteilhafterweise ein Aufprall auf ein Hindernis verbessert verhindert wird.

Insbesondere ist vorgesehen, dass das Bremssystem den Rädern des Kraftfahrzeugs zugeordnete Bremsaktuatoren als weitere ansteuerbare Aktuatoren umfasst, wobei bei der erkannten Störung des Steer-by-Wire-Lenksystems die Bremsaktuatoren bei gegebener Funktionsfähigkeit als Aktuatoren aus der Untermenge der funktionsfähigen Aktuatoren derart angesteuert werden, dass das Kraftfahrzeug zum Stillstand gebracht wird. Vorteilhafterweise hat dabei eine Ansteuerung der Bremsaktuatoren zur Einhaltung der Soll-Trajektorie Vorrang.

Weiter vorteilhaft umfasst das Antriebssystem den Rädern des Kraftfahrzeugs zugeordnete Antriebsaktuatoren, insbesondere den Rädern zugeordnete Elektromotoren, als weitere ansteuerbare Aktuatoren, wobei bei der erkannten Störung des Steer-by-Wire-Lenksystems die Antriebsaktuatoren bei gegebener Funktionsfähigkeit als Aktuatoren aus der Untermenge der funktionsfähigen Aktuatoren derart angesteuert werden, dass das Kraftfahrzeug zum Stillstand gebracht wird. Vorteilhaferweise werden die Antriebsaktuatoren dabei in einem Generatorbetrieb als Bremse genutzt. Vorteilhafterweise hat eine Ansteuerung der Antriebsaktuatoren zur Einhaltung der Soll-Trajektorie Vorrang gegenüber einer Verzögerung des Kraftfahrzeugs durch eine entsprechende Ansteuerung der Antriebsaktuatoren.

Das zur Lösung der eingangs genannten Aufgabe des Weiteren vorgeschlagene Kraftfahrzeug umfasst ein Steer-by-Wire-Lenksystem, ein Antriebssystem, ein Bremssystem und ein Feder-Dämpfungs-System, wobei den Systemen ansteuerbare Aktuatoren zugeordnet sind. Dabei umfasst das Steer-by-Wire-Lenksystem als einen ansteuerbaren Aktuator einen auf ein Koppelelement, insbesondere auf eine Zahnstange, wirkenden Lenksteller, wobei über das Koppelelement ein Radlenkwinkel von gelenkten Rädern des Kraftfahrzeugs einstellbar ist. Des Weiteren umfasst das Kraftfahrzeug ein Vehicle-Motion-Control-System, das vorteilhafterweise mit sämtlichen Aktuatoren zur Übertragung von Signalen verbunden ist. Das Kraftfahrzeug ist ausgebildet, nach einem erfindungsgemäß ausgestalteten Verfahren betrieben zu werden, insbesondere unter Nutzung des Vehicle-Motion-Control-Systems. Vorteilhafterweise sind den Aktuatoren dabei jeweils entsprechende Aktuatorsteuereinheiten zugeordnet, die ausgebildet sind, die Aktuatoren anzusteuern, insbesondere entsprechend von dem Vehicle-Motion-Control-System vorgegebenen Anweisungen. Vorteilhafterweise werden mit dem vorgeschlagenen Kraftfahrzeug die im Zusammenhang mit den Ausgestaltungen des vorgeschlagenen Verfahrens erläuterten Vorteile realisiert. Die Merkmale des Verfahrens sind dabei in entsprechender Weise auch auf das Kraftfahrzeug anwendbar.

Weitere vorteilhafte Einzelheiten, Merkmale und Ausgestaltungsdetails der Erfindung werden im Zusammenhang mit den in den Figuren (nachfolgend Fig.: Figur) dargestellten Ausführungsbeispielen näher erläutert. Dabei zeigt:
- Fig. 1: in einer schematischen Darstellung ein Ausführungsbeispiel für ein erfindungsgemäß ausgebildetes Kraftfahrzeug bei einem Betrieb gemäß einem Ausführungsbeispiel für ein erfindungsgemäß ausgebildetes Verfahren;
- Fig. 2: in einer vereinfachten perspektivischen Darstellung eine vorteilhafte Ausgestaltung eines Steer-by-Wire-Lenksystems eines Ausführungsbeispiels für ein erfindungsgemäß ausgebildetes Kraftfahrzeug;
- Fig. 3: in einem vereinfacht dargestellten Schaltbild ein Ausführungsbeispiel für eine Schaltungsanordnung für die Ansteuerung des Lenkstellers gemäß einem Ausführungsbeispiel für ein erfindungsgemäß ausgebildetes Verfahren; und
- Fig. 4a: in einer schematischen Darstellung einen Ausschnitt eines Steer-by-Wire-Lenksystems
- und: zur Erläuterung einer Ansteuerung des Lenkstellers gemäß einem Ausführungsbeispiel
- Fig. 4b: für ein erfindungsgemäß ausgebildetes Verfahren.

In den verschiedenen Figuren sind gleiche Teile in der Regel mit den gleichen Bezugszeichen versehen und werden daher mitunter auch jeweils nur im Zusammenhang mit einer der Figuren erläutert.

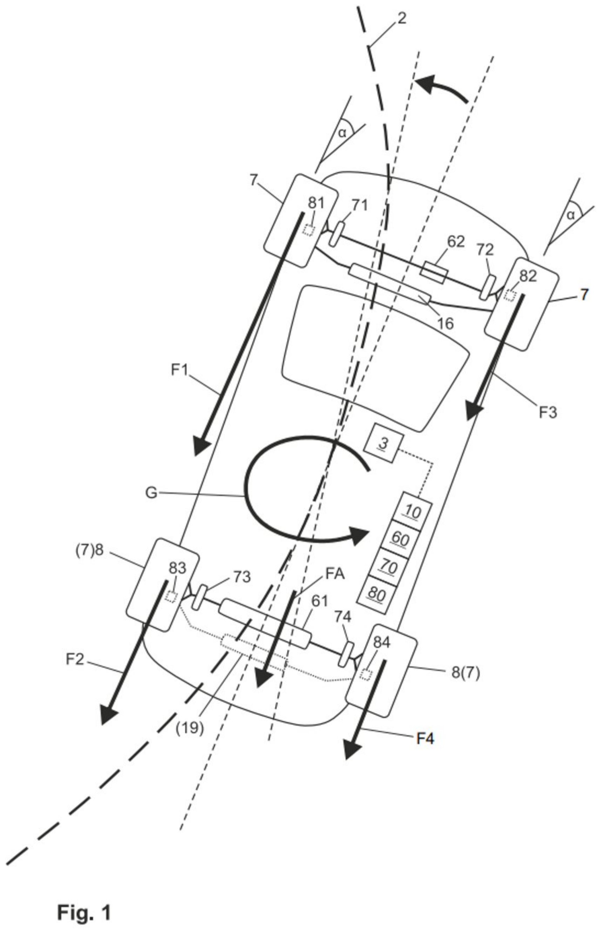

In Fig. 1 ist ein vorteilhaftes Ausführungsbeispiel für ein Kraftfahrzeug 1 skizziert. Das Kraftfahrzeug 1 umfasst ein Steer-by-Wire-Lenksystem 10, ein Antriebssystem 60, ein Bremssystem 70 und ein Feder-Dämpfung-System 80, die jeweils nur schematisch dargestellt sind. Außerdem umfasst das Kraftfahrzeug ein Vehicle-Motion-Control-System 3, das zur Übertragung von Signalen mit den Systemen 10, 60, 70, 80 des Kraftfahrzeugs 1 verbunden ist. Außerdem empfängt das Vehicle-Motion-Control-System 3 Werte von Sensoren (in Fig. 1 nicht explizit dargestellt), die einen aktuellen Fahrzustand des Kraftfahrzeugs 1 betreffen. Das Vehicle-Motion-Control-System 3 ist dabei insbesondere ausgebildet, auf Störungen in den Systemen 10, 60, 70, 80 zu reagieren und das Kraftfahrzeug in einem Notbetrieb zu betreiben und dabei zumindest teilweise den Ausfall von Aktuatoren durch Ansteuerung anderer Aktuatoren zu kompensieren. Vorteilhafterweise gibt das Vehicle-Motion-Control-System 3 dabei Soll-Größen vor, die von den entsprechenden Aktuatoren unter Verwendung einer diesen Aktuatoren jeweils zugeordneten Aktuatorsteuereinheit (in Fig. 1 nicht explizit dargestellt) umzusetzen sind.

In diesem Ausführungsbeispiel sind dem Feder-Dämpfung-System 80 des Kraftfahrzeugs ansteuerbare Dämpfungsaktuatoren 81, 82, 83, 84 an den jeweiligen Radaufhängungen zugeordnet, wobei die Dämpfungsaktuatoren 81, 82, 83, 84 aktiv angesteuert werden können, insbesondere über Magnetventile und Hydraulikelemente. In einem störungsfreien Normalbetrieb kann mittels der Dämpfungsaktuatoren 81, 82, 83, 84 insbesondere Hub-, Nick- und Wankbewegungen des Kraftfahrzeugs 1 aktiv entgegengewirkt werden. Zudem kann vorteilhafterweise in einem störungsfreien Normalbetrieb mittels des aktiven Feder-Dämpfung-Systems 80 bei Bedarf die Bodenfreiheit des Kraftfahrzeugs 1 variiert werden.

Des Weiteren umfasst das Bremssystem 70 des Kraftfahrzeugs 1 individuell ansteuerbare Bremsaktuatoren 71, 72, 73, 74, die jeweils den Rädern 7, 8 des Kraftfahrzeugs 1 zugeordnet sind. Das Antriebssystem 60 des Kraftfahrzeugs 1 umfasst zudem in diesem Ausführungsbeispiel einen den hinteren Rädern 8 zugeordneten Antriebsaktuator 61 und einem den vorderen Rädern 7 zugeordneten Antriebsaktuator 62. Die Antriebsaktuatoren 61, 62 sind dabei in diesem Ausführungsbeispiel jeweils als Elektromotoren ausgebildet, mit denen das Kraftfahrzeug an allen vier Rädern 7, 8 angetrieben werden kann. Das an den Rädern 7, 8 bereitzustellende Antriebsmoment ist dabei insbesondere abhängig von einer durch einen Fahrzeugnutzer oder ein Fahrerassistenzsystem, insbesondere auch das Vehicle-Motion-Control-System 3, gemachten Vorgabe einstellbar.

Das weiter von dem Kraftfahrzeug 1 umfasste Steer-by-Wire-Lenksystem 10 umfasst in diesem Ausführungsbeispiel eine Vorderradlenkung mit einem auf ein Koppelelement 15 wirkenden Lenksteller 16 als ansteuerbaren Aktuator. In einem störungsfreien Normalbetrieb kann der Lenksteller 16 über das Koppelelement 15 einen Radlenkwinkel α der gelenkten Räder 7 des Kraftfahrzeugs 1 einstellen, insbesondere in Abhängigkeit eines von einem Fahrzeugnutzer oder einem Fahrerassistenzsystem vorgegebenen Lenkbefehls. Wie in Fig. 1 angedeutet, kann das Steer-by-Wire-Lenksystem 10 optional zusätzlich eine Hinterradlenkung mit einem Hinterradlenksteller 19 aufweisen, mit dem dann die hinteren Räder ebenfalls gelenkt werden können, und somit eine Allradlenkung. Dabei ist aber insbesondere vorgesehen, dass mit der Hinterradlenkung nur vergleichsweise kleine Radlenkwinkel eingestellt werden können und die Allradlenkung insbesondere in einem Normalbetrieb als Proportionallenkung betrieben wird.

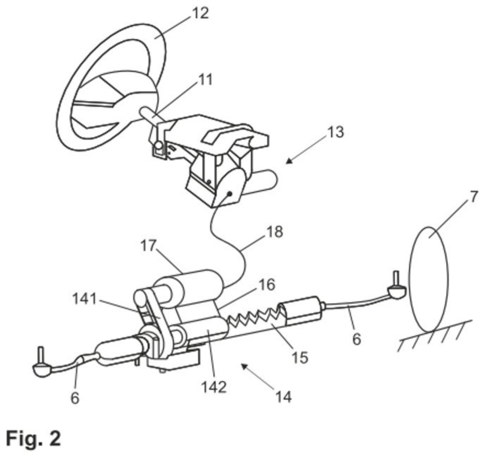

Ein detaillierter dargestelltes Ausführungsbeispiel für eine vorteilhafte Ausgestaltung des Steer-by-Wire-Lenksystems 10 des Kraftfahrzeugs 1 ist in Fig. 2 dargestellt. Das Steer-by-Wire-Lenksystem 10 umfasst in diesem Ausführungsbeispiel eine Lenksäule mit einer Lenkwelle 11 und einem Feedback-Aktuator 13. An einem Ende der Lenkwelle 11 ist eine als Lenkrad ausgebildete Lenkhandhabe 12 drehfest angeordnet. Über die Lenkhandhabe 12 kann ein Fahrzeugnutzer einen Lenkbefehl vorgeben. Der Feedback-Aktuator 13 ist ausgebildet, ein Drehmoment beziehungsweise ein Lenkwiderstands-Drehmoment auf die Lenkwelle 11 auszuüben, insbesondere zur Vermittlung eines Lenkgefühls. Dieses Lenkwiderstands-Drehmoment ist von einem Fahrzeugnutzer des Kraftfahrzeugs 1 über die Lenkhandhabe 3 als Lenkwiderstand wahrnehmbar. Zur Erzeugung des Drehmoments umfasst der Feedback-Aktuator 5 einen Feedback-Aktuator-Elektromotor mit einer diesem zugeordneten Feedback-Aktuator-Steuereinheit zur Ansteuerung des Feedback-Aktuator-Elektromotors.

Die Lenkhandhabe 12 des Steer-by-Wire-Lenksystems 10 lässt sich in bekannter Weise drehen, um einen Lenkbefehl in die Lenkwelle 11 einzubringen, der sensorisch erfasst wird. Dazu umfasst das Steer-by-Wire-Lenksystem 10 in diesem Ausführungsbeispiel eine der Lenkwelle 11 zugeordnete erste Lenkwinkelsensoreinheit (in Fig. 2 nicht explizit dargestellt), insbesondere eine Absolutwinkelsensoreinheit, und eine zweite Lenkwinkelsensoreinheit (in Fig. 2 ebenfalls nicht explizit dargestellt), insbesondere eine Relativwinkelsensoreinheit, die ausgebildet sind, einen mittels der Lenkhandhabe 12 eingestellten Winkel als Lenkwinkel der Lenkwelle 11 zu erfassen. Über eine Signalleitung 18 wird ein erfasster Lenkbefehl dabei an eine Lenkstellereinheit 16 des Steer-by-Wire-Lenksystems 10 übertragen, die zur Einstellung eines zu dem Lenkbefehl korrespondierenden Radlenkwinkel der lenkbaren Räder 7 auf ein als Zahnstange ausgebildetes Koppelelement 15 einwirkt. Mittels in Fig. 2 nicht explizit dargestellter Positionssensoren kann dabei vorteilhafterweise aus der Position des Koppelelements 12 der eingestellte Radlenkwinkel der gelenkten Räder 7 bestimmt werden.

Der Lenksteller 16 umfasst in diesem Ausführungsbeispiel einen Lenksteller-Elektromotor 17, der als Dreiphasen-Elektromotor, weiter insbesondere als Permanentmagnet-Synchronmotor, ausgebildet ist. Der Lenksteller 16 ist ausgebildet, durch Ansteuerung des Lenksteller-Elektromotors 17 eine erfasste Lenkvorgabe über ein Lenkgetriebe 14 in einen Radlenkwinkel α der lenkbaren Rädern 7 umzusetzen. Der Lenksteller-Elektromotor 17 wirkt dabei in diesem Ausführungsbeispiel über einen Transmissionsriemen 141 auf eine mit dem als Zahnstange ausgebildeten Koppelelement 12 in Wirkverbindung stehenden Spindeltrieb 142 ein. Durch entsprechende Ansteuerung des Lenksteller-Elektromotors 17 wird der Spindeltrieb 142 zur Umsetzung einer Lenkvorgabe in eine Lenkbewegung der lenkbaren Räder 14 angetrieben. Dabei wirkt der Lenksteller 16 über den mittels des Lenksteller-Elektromotors 17 angetriebenen Spindeltrieb 142 auf das Koppelelement 15 und stellt in einem störungsfreien Normalbetrieb den geforderten Radlenkwinkel α der lenkbaren Räder 7 des Kraftfahrzeugs 1 ein. Die lenkbaren Räder 7 sind in diesem Ausführungsbeispiel in bekannter Weise über Spurstangen 6 mit dem Koppelelement 15 verbunden. Die Spurstangen 6 selbst sind insbesondere in bekannter Weise über Achsschenkel mit je einem gelenkten Rad 7 verbunden.

Bei einem Fahrbetrieb des Kraftfahrzeugs 1 wird unter Berücksichtigung einer aktuellen Fahrvorgabe, die von einem Fahrzeugnutzer und/oder einem Fahrerassistenzsystem des Kraftfahrzeugs 1 getätigt werden kann, für das Kraftfahrzeug 1 eine Soll-Trajektorie 2 bestimmt, der das Kraftfahrzeug 1 folgen soll. Die Fahrvorgabe berücksichtigt dabei einen Lenkbefehl.

Vorteilhafterweise berücksichtigt die Fahrvorgabe des Weiteren eine aktuelle Beschleunigungsbeziehungsweise Verzögerungsvorgabe, die dann vorteilhafterweise ebenfalls in die Bestimmung der Soll-Trajektorie 2 eingeht. In einem störungsfreien Normalbetrieb werden die Aktuatoren 16, 61, 62, 71, 72, 73, 74, 81, 82, 83, 84 des Kraftfahrzeugs dabei so angesteuert, dass das Kraftfahrzeug 1 sich entsprechend der Soll-Trajektorie 2 bewegt. Zudem wird während des Normalbetriebs ständig die Funktionsfähigkeit der Aktuatoren 16, 61, 62, 71, 72, 73, 74, 81, 82, 83, 84 geprüft.

Die Funktionsfähigkeit der Aktuatoren 16, 19, 61, 62, 71, 72, 73, 74, 81, 82, 83, 84 wird dabei durch eine Abfrage eines Status-Signals der Aktuatoren 16, 19, 61, 62, 71, 72, 73, 74, 81, 82, 83, 84 geprüft, wobei das Status-Signal in diesem Ausführungsbeispiel jeweils von einer dem jeweiligen Aktuator zugeordneten Diagnoseeinheit (nicht explizit dargestellt) erzeugt wird. Zusätzlich wird die Funktionsfähigkeit der Aktuatoren 16, 19, 61, 62, 71, 72, 73, 74, 81, 82, 83, 84 bei einer Ansteuerung durch einen Vergleich einer von einem jeweiligen Aktuator 16, 19, 61, 62, 71, 72, 73, 74, 81, 82, 83, 84 angeforderten Leistung mit einer von dem jeweiligen Aktuator 16, 19, 61, 62, 71, 72, 73, 74, 81, 82, 83, 84 bereitgestellten Leistung geprüft. Wird bei diesem Vergleich eine signifikante Abweichung festgestellt, wird auf eine Beeinträchtigung der Funktionsfähigkeit des betreffenden Aktuators erkannt.

Wird nun während eines Normalbetriebs des Kraftfahrzeugs 1 eine Störung des Steer-by-Wire-Lenksystems 10 festgestellt, was insbesondere auch aufgrund einer Kollision des Kraftfahrzeugs der Fall sein kann, so werden die weiterhin funktionsfähigen Aktuatoren oder zumindest eine Auswahl der weiterhin funktionsfähigen Aktuatoren des Steer-by-Wire-Lenksystems 10, des Antriebssystems 60, des Bremssystems 70 und des Feder-Dämpfung-Systems 80 in der Weise angesteuert, insbesondere unter Nutzung des Vehicle-Motion-Control-Systems 3, dass der Steuerungseingriff auf die Aktuatoren darauf gerichtet ist, dass das Kraftfahrzeug 1 weiterhin möglichst genau der Soll-Trajektorie 2 folgt und das Kraftfahrzeug 1 zudem kontrolliert zum Stillstand gebracht wird. Eine Störung des Steer-by-Wire-Lenksystems 10 wird insbesondere dann festgestellt, wenn das Steer-by-Wire-Lenksystem 10 nicht in vorgesehener Weise eine Lenkvorgabe in eine Lenkbewegung der lenkbaren Räder 7 des Kraftfahrzeugs 1 umsetzen kann, insbesondere aufgrund eines fehlerhaften Ansprechens des Lenkstellers 10 oder aufgrund eines Problems mit einem der lenkbaren Räder 7.

Sind die Bremsaktuatoren 71, 72, 73, 74 weiterhin funktionsfähig, werden diese angesteuert, und zwar so, dass das Kraftfahrzeug 1 durch Bremseingriffe verzögert, aber dabei ein Ausbrechen des Kraftfahrzeugs 1 verhindert wird. Insbesondere wenn das Kraftfahrzeug 1 entsprechend der Soll-Trajektorie 2 einer Kurve folgen soll, werden die Bremsaktuatoren 71, 72, 73, 74 zudem asymmetrisch zur Erzeugung eines Giermoments G angesteuert, wobei das zu erzeugende Giermoment G aus der Soll-Trajektorie 2 abgeleitet wird. Durch die so erfolgende Ansteuerung der Bremsaktuatoren 71, 72, 73, 74 folgt das Kraftfahrzeug 1 der Soll-Trajektorie 2 im Wesentlichen weiterhin bis zum Stillstand. Sind auch die Antriebsaktuatoren 61, 62 des Antriebssystems 60 weiterhin funktionsfähig, werden diese angesteuert, um die Fahrbewegung des Kraftfahrzeugs 1 weiter zu verzögern und zur Erreichung des zu erzeugenden Giermoments (G) beizutragen.

Optional kann vorgesehen werden auch die Dämpfungs-Aktuatoren 81, 82, 83, 84 anzusteuern, um die Fahrtrichtung des Kraftfahrzeugs 1 für eine Einhaltung der Soll-Trajektorie 2 anzusteuern. Die Ansteuerung der Dämpfungs-Aktuatoren 81, 82, 83, 84 erfolgt dabei insbesondere so, dass eine Karosseriebewegung hervorgerufen wird, insbesondere eine Wankbewegung, mit der ein Radlenkwinkel α der lenkbaren Räder 7 gezielt beeinflusst wird.

Situativ wird dabei entschieden, insbesondere von dem Vehicle-Motion-Control-System 3, welche der funktionsfähigen Aktuatoren in welcher Weise angesteuert werden sollen, um das Kraftfahrzeug 1 der Soll-Trajektorie 2 folgend zum Stillstand zu bringen.

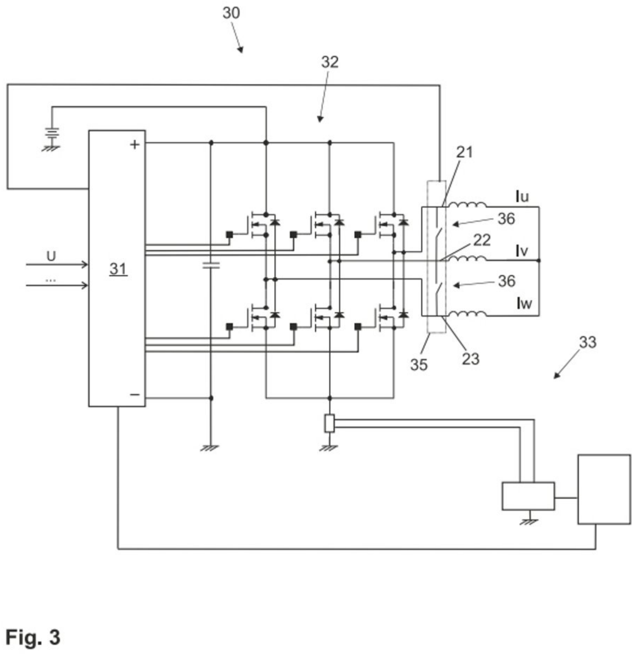

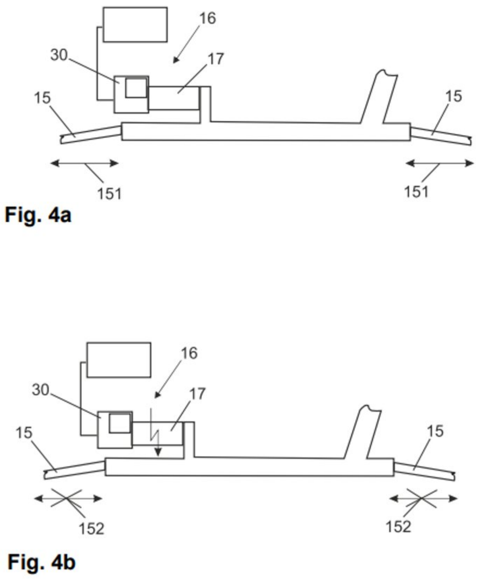

Zudem wird dabei der auf das Koppelelement 15 wirkende Lenksteller 16 derart angesteuert, insbesondere getriggert von dem Vehicle-Motion-Control-System 3, dass der Lenksteller 16 gezielt eine Änderung des aktuellen Radlenkwinkels α der gelenkten Räder 7 des Kraftfahrzeugs 1 dämpft oder zulässt, indem eine Bewegung des Koppelelements 15 zugelassen oder blockiert wird, sodass dadurch einer Abweichung von der Soll-Trajektorie 2 entgegengewirkt wird. Der Elektromotor 17 des Lenkstellers 16 und der Lenksteller 16 sowie dessen Ansteuerung werden dabei unter ergänzender Bezugnahme auf Fig. 3 beziehungsweise Fig. 4a und Fig. 4b weitergehend erläutert.

Der Elektromotor 17 des Lenkstellers 16 umfasst in diesem Ausführungsbeispiel einen Dreiphasen-Elektromotor 17, wobei eine Bewegung des Koppelelements 15 und somit eine Änderung des Radlenkwinkels α der lenkbaren Räder 7 durch ein Kurzschließen der Phasen 21, 22, 23 des Elektromotors gedämpft wird. Durch ein Trennen des Kurzschlusses der Phasen 21, 22, 23, also eine Unterbrechung des Kurzschlusses, wird dagegen eine Bewegung des Koppelelements 15 und somit eine Änderung des Radlenkwinkels α der lenkbaren Räder 7 zugelassen.

Fig. 3 stellt eine beispielhafte Ausgestaltung für den Elektromotor 17 und dessen Ansteuerung dar. Dabei zeigt Fig. 3 eine Schaltungsanordnung 30 mit einer Steuereinheit 31, einen drei Halbbrücken umfassenden Wechselrichter 32 über den die Phasen 21, 22, 23 des Elektromotors 17 angesteuert werden, und einen Rückkopplungszweig 33, über den die Steuereinheit 31 eine Rückmeldung über die an den Phasen 21, 22, 23 anliegenden Ströme erhält. Zudem ist eine Schalteinheit 35 vorgesehen, die ausgebildet ist, die Phasen 21, 22, 23 des Elektromotors 17 elektrisch leitfähig miteinander zu verbinden, also die Phasen 21, 22, 23 kurzzuschließen, oder die elektrisch leitfähige Verbindung der Phasen 21, 22, 23 wieder aufzutrennen, also den Kurzschluss der Phasen 21, 22, 23 wieder zu unterbrechen. Dazu weist die Schalteinheit 35 die Phasen 21, 22, 23 des Elektromotors 17 verbindende ansteuerbare Schaltelemente 36, insbesondere selbstleitende MOSFETs, auf. Die Schalteinheit 35 sowie die Schaltelemente 36 sind in Fig. 3 dabei nur schematisch dargestellt. Über die Schaltelemente 36 können die Phasen 21, 22, 23 des Elektromotors 17 zur Dämpfung der Bewegung des Koppelelements 15 und somit zur Dämpfung einer Änderung eines eingestellten Radlenkwinkels α elektrisch kurzgeschlossen werden. Die Ansteuerung der Schaltelemente 36 der Schalteinheit 35 erfolgt mittels der Steuereinheit 31. Die Steuereinheit 31 kommuniziert dabei insbesondere mit dem Vehicle-Motion-Control-System 3.

In Fig. 4a und Fig. 4b ist in einer schematischen Darstellung bei einer Störung des Steer-by-Wire-Lenksystems die Auswirkung der geöffneten Schaltelemente 36 (kein Kurzschluss der Phasen 21, 22, 23 des Elektromotors 17; Fig. 4a) und der geschlossenen Schaltelemente 36 (Kurzschluss der Phasen 21, 22, 23 des Elektromotors 17; Fig. 4b) dargestellt. Sind die Schaltelemente 36 geöffnet, und die Phasen 21, 22, 23 des Elektromotors 17 des Lenkstellers 16 entsprechend nicht kurzgeschlossen, so ist das Koppelelement 15 bei der Störung des Steer-by-Wire-Lenksystems 10 im Wesentlichen frei beweglich, wie durch die Pfeile 151 symbolisch dargestellt. Das bedeutet, dass sich beispielsweise beim Durchfahren eines Schlagloches ein anderer Radlenkwinkel α der gelenkten Räder 7 einstellen kann. Diese freie Beweglichkeit des Koppelelements 15 wird aber auch genutzt, um durch Ansteuerung von funktionsfähigen und verfügbaren Aktuatoren 61, 62, 71, 72, 73, 74, 81, 82, 83, 84 der Kraftfahrzeugsysteme 60, 70, 80 ein Einschlagen der lenkbaren Räder 7 in eine gewünschte Richtung zu beeinflussen und damit einen Radlenkwinkel α bei der Störung des Steer-by-Wire-Lenksystems 10 gezielt in einer Weise zu beeinflussen, dass das Kraftfahrzeug 1 weiter der Soll-Trajektorie 2 folgt. Ist ein für eine Einhaltung der Soll-Trajektorie 2 vorteilhafter Radlenkwinkel α eingestellt, werden die Schaltelemente 36 geschlossen und somit die Phasen 21, 22, 23 des Elektromotors 17 des Lenkstellers 16 kurzgeschlossen, was symbolisch in Fig. 4b dargestellt ist. Der Elektromotor 17 wirkt durch den Kurzschluss als Motorbremse und fixiert dabei weitgehend das Koppelelement 15 in der aktuellen Position und dämpft somit eine Änderung des eingestellten Radlenkwinkels α. Eine Veränderung des Radlenkwinkels α kann dabei in mehreren Schritten erfolgen, das heißt die Schaltelemente 36 wechseln dann im Zusammenspiel mit der Ansteuerung der weiteren Aktuatoren, insbesondere des linken vorderen Bremsaktuators 71 oder des rechten vorderen Bremsaktuators 72, zwischen geöffneter und geschlossener Stellung, und der Zustand des Koppelelements 15 somit zwischen frei beweglich 151 und blockiert 152.

Bei der Darstellung in Fig. 1, bei der eine Störung des Steer-by-Wire-Lenksystems 10 vorliegen soll, und das Kraftfahrzeug 1 dennoch weiter der bestimmten Soll-Trajektorie 2 weiter folgen soll, ist dabei zu erkennen, dass der aktuelle Radlenkwinkel α der gelenkten Räder 7 nicht geeignet ist, damit die Soll-Trajektorie 2 eingehalten werden kann. Konkret ist in der in Fig. 1 beispielhaft dargestellten Situation vorgesehen, dass sämtliche Bremsaktuatoren 71, 72, 73, 74 angesteuert werden, wobei die an den Rädern 7, 8 eingezeichneten Pfeile F1, F2, F3, F4 die unterschiedlich starken Bremseingriffe symbolisieren. Zusätzlich wird der hintere Antriebsaktuator 61 zur Erzeugung eines Antriebsmoments FA angesteuert. Durch diese Ansteuerung der Aktuatoren 71, 72, 73, 74, 61 wird ein Giermoment G erzeugt, dass das Kraftfahrzeug 1 zwingt, der Soll-Trajektorie 2 weiter zu folgen. Für die Erzeugung des Giermoments G kann eine Gierratenregelung verwendet werden. Die Veränderung des Radlenkwinkels α wird bei einer Anwendung der Gierratenregelung gedämpft, die Schaltelemente 36 also geschlossen. Insbesondere ergänzend oder alternativ kann mit dem vorderen linken Bremsaktuator 71 eine stärke Bremskraft F1 realisiert werden, als mit dem vorderen rechten Bremsaktuator 72 und der Lenksteller 16 derart angesteuert werden, dass bei ungedämpfter Bewegung des Koppelelements 15 der Radlenkwinkel α verändert wird und die lenkbaren Räder 7 nach links einschlagen. Bei einem geeigneten Radlenkwinkel werden die Schaltelemente 36 dann wieder angesteuert, dass diese schließen, und somit die Bewegung des Koppelelements 15 weitgehend verhindert wird.

Bei einem Kraftfahrzeug 1 mit einem Steer-by-Wire-Lenksystem 10, das zudem eine Hinterradlenkung mit einem Hinterradlenksteller 19 aufweist, ist bei einer erkannten Störung des Steer-by-Wire-Lenksystems 10, die die Vorderradlenkung betrifft, zudem vorteilhafterweise vorgesehen, dass der funktionsfähige Hinterradlenksteller 19 ebenfalls genutzt und angesteuert wird, damit das Kraftfahrzeug 1 der bestimmten Soll-Trajektorie 2 weiter folgt.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Kraftfahrzeug
- 2: Soll-Trajektorie
- 3: Vehicle-Motion-Control-System
- 6: Spurstange
- 7: gelenkte Räder
- 8: ungelenkte Räder
- 10: Steer-by-Wire-Lenksystem
- 11: Lenkwelle
- 12: Lenkhandhabe
- 13: Feedback-Aktuator
- 14: Lenkgetriebe
- 141: Transmissionsriemen
- 142: Spindeltrieb
- 15: Koppelelement
- 151: Koppelelement (15) frei beweglich
- 152: Bewegung des Koppelelements (15) blockiert
- 16: Lenksteller
- 17: Elektromotor des Lenkstellers (16)
- 18: Signalleitung
- 19: Hinterradlenksteller
- 21: Phase des Elektromotors (17)
- 22: Phase des Elektromotors (17)
- 23: Phase des Elektromotors (17)
- 30: Schaltungsanordnung
- 31: Steuereinheit
- 32: Wechselrichter
- 33: Rückkopplungszweig
- 35: Schalteinheit
- 36: Schaltelement
- 60: Antriebssystem
- 61: hinterer Antriebsaktuator
- 62: vorderer Antriebsaktuator
- 70: Bremssystem
- 71: Bremsaktuator vorne links
- 72: Bremsaktuator vorne rechts
- 73: Bremsaktuator hinten links
- 74: Bremsaktuator hinten rechts
- 80: Feder-Dämpfung-System
- 81: Dämpfungsaktuator vorne links
- 82: Dämpfungsaktuator vorne rechts
- 83: Dämpfungsaktuator hinten links
- 84: Dämpfungsaktuator hinten rechts
- α: Radlenkwinkel
- F1: Bremskraft
- F2: Bremskraft
- F3: Bremskraft
- F4: Bremskraft
- FA: Antriebsmoment
- G: Giermoment

## Patentansprüche

1. Verfahren zum Betreiben eines Kraftfahrzeugs (1) mit einem Steer-by-Wire-Lenksystem (10), einem Antriebssystem (60), einem Bremssystem (70) und einem Feder-Dämpfung-System (80), wobei den Systemen (10, 60, 70, 80) ansteuerbare Aktuatoren (16, 19, 61, 62, 71, 72, 73, 74, 81, 82, 83, 84) zugeordnet sind und das Steer-by-Wire-Lenksystem (10) als einen ansteuerbaren Aktuator einen auf ein Koppelelement (15) wirkenden Lenksteller (16) umfasst, wobei über das Koppelelement (15) ein Radlenkwinkel (α) von gelenkten Rädern (7) des Kraftfahrzeugs (1) einstellbar ist,
wobei bei einem Fahrbetrieb des Kraftfahrzeugs (1) unter Berücksichtigung einer aktuellen Fahrvorgabe eines Fahrzeugnutzers oder einer aktuellen Fahrvorgabe eines Fahrerassistenzsystems eine Soll-Trajektorie (2) für das Kraftfahrzeug (1) bestimmt wird und die Funktionsfähigkeit der Aktuatoren (16, 19, 61, 62, 71, 72, 73, 74, 81, 82, 83, 84) geprüft wird,
wobei bei einer erkannten Störung des Steer-by-Wire-Lenksystems (10) zumindest eine Untermenge der funktionsfähigen Aktuatoren (71, 72, 73, 74) derart angesteuert wird, dass das Kraftfahrzeug (1) der bestimmten Soll-Trajektorie (2) weiter zumindest weitgehend folgt, und
wobei der auf das Koppelelement (15) wirkende Lenksteller (16) dabei zudem derart angesteuert wird, dass der Lenksteller (16) gezielt eine Änderung eines Radlenkwinkels (α) von gelenkten Rädern (7) des Kraftfahrzeugs (1) zur Reduzierung einer Abweichung von der Soll-Trajektorie (2) dämpft oder zulässt.

2. Verfahren nach Anspruch 1, **dadurch gekennzeichnet, dass** der Lenksteller (16) einen mehre Phasen (21, 22, 23) umfassenden Elektromotor (17) umfasst, wobei die Änderung des Radlenkwinkels (α) durch ein Kurzschließen der Phasen (21, 22, 23) gedämpft wird und durch ein Trennen des Kurzschlusses der Phasen (21, 22, 23) zugelassen wird.

3. Verfahren nach Anspruch 1 oder Anspruch 2, **dadurch gekennzeichnet, dass** bei der erkannten Störung des Steer-by-Wire-Lenksystems (10) wenigstens ein Aktuator (71, 72, 73, 74) aus der Untermenge der funktionsfähigen Aktuatoren des Weiteren derart angesteuert wird, dass das Kraftfahrzeug (1) zum Stillstand gebracht wird.

4. Verfahren nach einem der vorstehenden Ansprüche, **dadurch gekennzeichnet, dass** das Steer-by-Wire-Lenksystem (10) des Weiteren eine Hinterradlenkung mit einem Hinterradlenksteller (19) als einen weiteren ansteuerbaren Aktuator umfasst, wobei bei der erkannten Störung des Steer-by-Wire-Lenksystems (10) der Hinterradlenksteller (19) bei gegebener Funktionsfähigkeit als Aktuator aus der Untermenge der funktionsfähigen Aktuatoren derart angesteuert wird, dass das Kraftfahrzeug (1) der bestimmten Soll-Trajektorie (2) weiter zumindest weitgehend folgt.

5. Verfahren nach einem der vorstehenden Ansprüche, **dadurch gekennzeichnet, dass** das Bremssystem (70) den Rädern (7, 8) des Kraftfahrzeugs (1) zugeordnete Bremsaktuatoren (71, 72, 73, 74) als weitere ansteuerbare Aktuatoren umfasst, wobei bei der erkannten Störung des Steer-by-Wire-Lenksystems (10) die Bremsaktuatoren (71, 72, 73, 74) bei gegebener Funktionsfähigkeit als Aktuatoren aus der Untermenge der funktionsfähigen Aktuatoren derart asymmetrisch angesteuert werden, dass ein Giermoment (G) erzeugt wird, sodass das Kraftfahrzeug (1) der Soll-Trajektorie (2) weiter zumindest weitgehend folgt.

6. Verfahren nach einem der vorstehenden Ansprüche soweit auf Anspruch 3 rückbezogen, **dadurch gekennzeichnet, dass** das Bremssystem (70) den Rädern (7, 8) des Kraftfahrzeugs (1) zugeordnete Bremsaktuatoren (71, 72, 73, 74) als weitere ansteuerbare Aktuatoren umfasst, wobei bei der erkannten Störung des Steer-by-Wire-Lenksystems (10) die Bremsaktuatoren (71, 72, 73, 74) bei gegebener Funktionsfähigkeit als Aktuatoren aus der Untermenge der funktionsfähigen Aktuatoren derart angesteuert werden, dass das Kraftfahrzeug (1) zum Stillstand gebracht wird.

7. Verfahren nach einem der vorstehenden Ansprüche, **dadurch gekennzeichnet, dass** das Feder-Dämpfung-System (80) den Rädern (7, 8) des Kraftfahrzeugs (1) jeweils zugeordnete Dämpfungs-Aktuatoren (81, 82, 83, 84) als weitere ansteuerbare Aktuatoren umfasst, wobei bei der erkannten Störung des Steer-by-Wire-Lenksystems (10) die Dämpfungs-Aktuatoren (81, 82, 83, 84) bei gegebener Funktionsfähigkeit als Aktuatoren aus der Untermenge der funktionsfähigen Aktuatoren derart angesteuert werden, dass ein Radlenkwinkel (α) der lenkbaren Räder (7) gezielt beeinflusst wird, sodass das Kraftfahrzeug (1) der Soll-Trajektorie (2) weiter zumindest weitgehend folgt.

8. Verfahren nach einem der vorstehenden Ansprüche, **dadurch gekennzeichnet, dass** das Antriebssystem (60) den Rädern (7, 8) des Kraftfahrzeugs (1) zugeordnete Antriebsaktuatoren (61, 62) als weitere ansteuerbare Aktuatoren umfasst, wobei bei der erkannten Störung des Steer-by-Wire-Lenksystems (10) die Antriebsaktuatoren (61, 62) bei gegebener Funktionsfähigkeit als Aktuatoren aus der Untermenge der funktionsfähigen Aktuatoren derart angesteuert werden, dass ein Giermoment (G) erzeugt wird, sodass das Kraftfahrzeug (1) der Soll-Trajektorie (2) weiter zumindest weitgehend folgt.

9. Verfahren nach einem der vorstehenden Ansprüche, **dadurch gekennzeichnet, dass** das Antriebssystem (60) den Rädern (7, 8) des Kraftfahrzeugs (1) zugeordnete Antriebsaktuatoren (61, 62) als weitere ansteuerbare Aktuatoren umfasst, wobei bei der erkannten Störung des Steer-by-Wire-Lenksystems (10) die Antriebsaktuatoren (61, 62) bei gegebener Funktionsfähigkeit als Aktuatoren aus der Untermenge der funktionsfähigen Aktuatoren derart angesteuert werden, dass das Kraftfahrzeug (1) zum Stillstand gebracht wird.

10. Verfahren nach einem der vorstehenden Ansprüche, **dadurch gekennzeichnet, dass** die Funktionsfähigkeit der Aktuatoren (16, 19, 61, 62, 71, 72, 73, 74, 81, 82, 83, 84) durch eine Abfrage eines Status-Signals der Aktuatoren (16, 19, 61, 62, 71, 72, 73, 74, 81, 82, 83, 84) geprüft wird.

11. Verfahren nach einem der vorstehenden Ansprüche, **dadurch gekennzeichnet, dass** die Funktionsfähigkeit der Aktuatoren (16, 19, 61, 62, 71, 72, 73, 74, 81, 82, 83, 84) durch einen Vergleich einer von einem jeweiligen Aktuator (16, 19, 61, 62, 71, 72, 73, 74, 81, 82, 83, 84) angeforderten Leistung mit einer von dem jeweiligen Aktuator (16, 19, 61, 62, 71, 72, 73, 74, 81, 82, 83, 84) bereitgestellten Leistung geprüft wird.

12. Kraftfahrzeug (1) mit einem Steer-by-Wire-Lenksystem (10), einem Antriebssystem (60), einem Bremssystem (70) und einem Feder-Dämpfung-System (80), wobei den Systemen (10, 60, 70, 80) ansteuerbare Aktuatoren (16, 19, 61, 62, 71, 72, 73, 74, 81, 82, 83, 84) zugeordnet sind, wobei das Steer-by-Wire-Lenksystem (10) als einen ansteuerbaren Aktuator einen auf ein Koppelelement (15) wirkenden Lenksteller (16) umfasst, wobei über das Koppelelement (15) ein Radlenkwinkel (α) von gelenkten Rädern (7) des Kraftfahrzeugs (1) einstellbar ist, und wobei das Kraftfahrzeug (1) ein Vehicle-Motion-Control-System (3) umfasst, **dadurch gekennzeichnet, dass** das Kraftfahrzeug (1) ausgebildet ist, nach einem Verfahren gemäß einem der vorstehenden Ansprüche betrieben zu werden.
